# DEMANDE DE BREVET EUROPEEN

(11) **EP 3 208 205 A1**
(43) Date de publication de la demande: **23.08.2017**
(21) Numéro de dépôt: 17156060.0
(22) Date de dépôt: 14.02.2017
(51) Int. Cl.: B65D 5/42

(54) **BOÎTE JETABLE POUR LA CUISSON ET LE TRANSPORT D'UN PRODUIT ALIMENTAIRE PRÉPARÉ, ET NOTAMMENT D'UNE PIZZA**

(30) Priorité: 18.02.2016 FR 1651330
(71) Demandeur: ADIAL, 14100 Lisieux (FR)
(72) Inventeur: LORILLARD, Ludovic, 14840 Cuverville (FR)
(74) Mandataire: Gevers & Orès

(57) **Abrégé**

L'invention concerne une boîte (10) jetable pour la cuisson et le transport d'un produit alimentaire préparé, et notamment d'une pizza (11) qui comporte, un fond (16) plan horizontal comportant au moins une ouverture (24) traversante, un panneau (18) latéral vertical qui s'étend vers le haut sur toute la périphérie du fond (16), et une plaque (14) de support de cuisson horizontale, rigide, qui repose sur le fond (16), caractérisée en ce que la plaque (14) de support de cuisson comporte au moins un trou (26) traversant suivant une orientation verticale et en ce qu'au moins une partie pleine de la plaque (14) de support de cuisson est agencée en regard de l'ouverture (24) du fond (16).

## Description

### DOMAINE TECHNIQUE DE L'INVENTION

La présente invention concerne une boîte jetable pour la cuisson et le transport d'un produit alimentaire.

La présente invention concerne plus particulièrement une boîte jetable pour la cuisson et le transport d'un produit alimentaire préparé, et notamment d'une pizza qui comporte, un fond plan horizontal comportant au moins une ouverture traversante, un panneau latéral vertical qui s'étend vers le haut sur toute la périphérie du fond, et une plaque de support de cuisson horizontale, rigide, qui repose sur le fond.

### ÉTAT DE LA TECHNIQUE

Les produits alimentaires préparés à l'avance sont distribués sous deux formes : cuits, prêts à être consommés, ou crus, prêts à être cuits. C'est notamment le cas pour les pizzas.

Certains consommateurs préfèrent cuire leur pizza chez eux dans leur four de manière à les manger encore chaude.

Les fours de cuisson traditionnels, que l'on trouve chez les particuliers, sont en général équipés d'une grille de cuisson classique, à barreaux, et de plateaux de cuisson plans en métal.

Ces grilles de cuisson avec de larges espaces entre les barreaux ne sont pas adaptées pour soutenir directement les préparations, et notamment les pizzas qui se déforment dans lesdits espaces.

Les plateaux de cuisson sont adaptés au soutien de préparations telles que des pizzas, mais leur surface plane en métal a un effet isolant pour la face inférieure de la pizza. La cuisson n'est alors pas uniforme et, notamment, le croustillant n'est pas réparti sur la surface de la pizza en contact avec la plaque de cuisson.

D'autres consommateurs préfèrent acheter une pizza cuite et chaude qui pourra être consommée dès son achat, dans n'importe quel lieu.

De manière connue il existe des distributeurs de pizzas qui permettent de fournir des pizzas cuites et chaudes.

Ces distributeurs sont équipés d'un magasin de stockage des pizzas préparées et d'un moyen de cuisson des pizzas.

Les pizzas peuvent être stockées dans le magasin dans des boîtes. Après le choix de la commande et le paiement par le client, la boîte est acheminée vers les moyens de cuisson de la pizza. La pizza est extraite automatiquement de sa boîte pour être cuite de façon optimale, puis elle est replacée encore chaude dans sa boîte.

Les clients reçoivent alors une boîte contenant leur pizza cuite et transportable. Les boîtes utilisées dans les distributeurs doivent être compatibles avec les moyens de déplacement entre les différents compartiments des distributeurs.

Ces boîtes doivent également être adaptées aux conditions de température qu'elles rencontrent, et notamment dans le compartiment de cuisson.

Dans tous les cas, les pizzas sont vendues dans des boîtes qui permettent leur transport jusqu'à un lieu de consommation.

Pour réduire les coûts de fabrication, et pour ne pas encombrer le consommateur après avoir terminé de manger, les boîtes doivent être jetables, et à usage unique.

De manière connue, il existe des distributeurs de pizzas qui permettent de fournir à la fois des pizzas cuites, chaudes, et des pizzas préparées froides selon le choix du consommateur.

Le but de l'invention est de proposer une boîte qui garde toutes les caractéristiques citées précédemment et qui résout les problèmes qui ont été mentionnés.

Le but de l'invention est notamment de proposer une boîte pour le transport et la cuisson d'une pizza, adaptée à un distributeur automatique de pizza, et qui permet d'optimiser la cuisson d'une pizza aussi bien dans le four du distributeur automatique, que dans un four traditionnel.

### BREF RESUME DE L'INVENTION

L'invention propose une boîte jetable pour la cuisson et le transport d'un produit alimentaire préparé, et notamment d'une pizza, qui comporte un fond plan horizontal comportant au moins une ouverture traversante, un panneau latéral vertical qui s'étend vers le haut sur toute la périphérie du fond, et une plaque de support de cuisson horizontale, rigide, qui repose sur le fond, caractérisée en ce que la plaque de support de cuisson comporte au moins un trou traversant suivant une orientation verticale et en ce qu'au moins une partie pleine de la plaque de support de cuisson est agencée en regard de l'ouverture du fond.

Ceci permet notamment de provoquer une course vers le haut de la pizza hors de la boîte au moyen de doigts d'actionnement à déplacement vertical qui passent par les trous et agissent sur une partie pleine de la plaque.

Selon d'autres caractéristiques de l'invention,
- au moins une partie pleine de la plaque est en regard de l'ouverture du fond quelle que soit la position angulaire de la plaque de support par rapport au fond ;
- la boîte comporte des moyens de positionnement angulaire de la plaque de support par rapport au fond ;
- les moyens de positionnement angulaire sont des surfaces complémentaires de la plaque de support et du panneau latéral ;
- au moins une partie pleine de la plaque de support s'étend en regard de la totalité de l'ouverture du fond ;
- la plaque de support comporte une pluralité de trous ;
- les trous de la plaque sont de dimensions différentes.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue éclatée d'un premier mode de réalisation d'une boîte jetable selon les enseignements de l'invention ;
- la figure 2 est une vue en coupe de l'invention selon un plan A de la figure 1 ;
- la figure 3 est une vue de dessus d'une plaque de support de cuisson d'une boîte telle qu'illustrée à la figure 1 ;
- la figure 4 est une vue similaire à celle de la figure 3, d'un deuxième mode de réalisation de l'invention ;
- la figure 5 est une vue similaire à celle de la figure 3, d'un troisième mode de réalisation de l'invention.

### DESCRIPTION DETAILLEE DES FIGURES

Dans la suite de la description, des éléments présentant une structure identique et/ou des fonctions analogues seront désignés par une même référence.

Dans la suite de la description, on adoptera par convention, à titre non limitatif, des orientations longitudinale, verticale, transversale indiquées par le trièdre L,V,T, des figures.

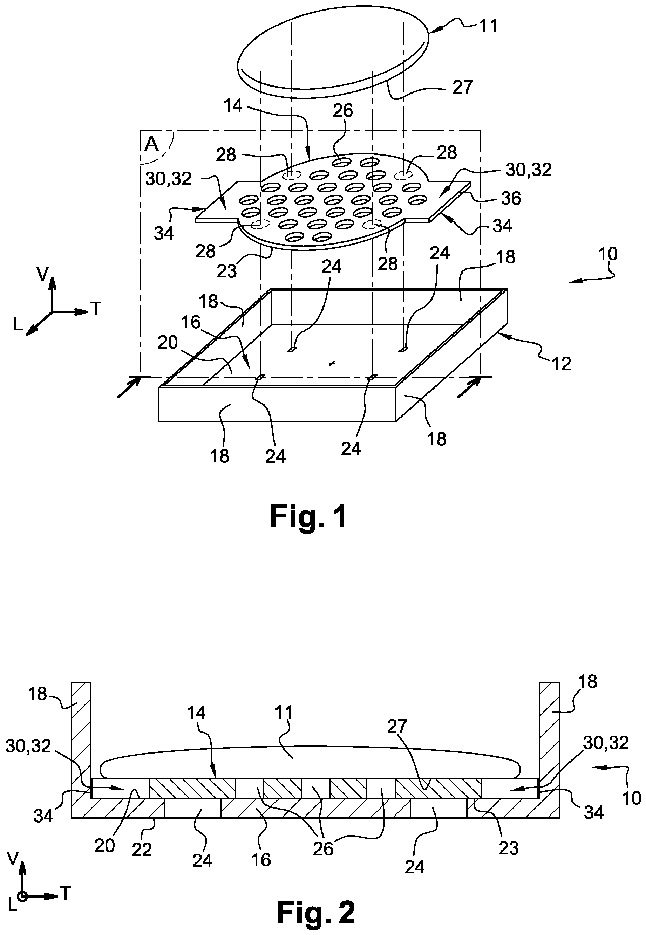

A la figure 1, on a représenté une boîte 10 selon un premier mode de réalisation de l'invention, destinée à la cuisson et au transport d'une pizza. La boîte comporte un emballage 12 et une plaque 14 de support de cuisson.

La plaque 14 de support de cuisson et la pizza 11 sont destinés à être logés dans l'emballage 12.

L'emballage 12 comporte un fond 16 plan horizontal carré et quatre panneaux 18 latéraux. Les panneaux 18 s'étendent verticalement vers le haut sur toute la périphérie du fond 16.

Suivant une variante non représentée, le fond est un disque tout comme la plaque de support de cuisson. Un panneau unique délimite le pourtour du fond.

L'emballage 12 est en matériau jetable apte à conserver sa forme et sa rigidité sous une chaleur d'un four traditionnel, entre 200°C et 300°C, pendant un temps nécessaire à la cuisson d'une pizza, par exemple de 10 minutes.

L'emballage 12 doit aussi être suffisamment rigide pour permettre le transport de la pizza 11 en étant tenu à main nue, sans se déformer. L'emballage 12 est, par exemple, en carton.

Le fond 16 de l'emballage 12 est destiné à supporter la plaque 14 de support et la pizza 11.

Le fond 16 de l'emballage 12 est un plateau dont la taille et la forme sont supérieures à celles de la pizza 11. Ici le fond 16 est de forme sensiblement carré. Le fond 16 comporte une face supérieure 20 et une face inférieure 22. La face supérieure 20 est en contact avec la face inférieure de la plaque 14.

Le fond 16 comporte aussi quatre ouvertures 24 traversantes identiques. Les ouvertures 24 sont de forme sensiblement carré et traversent verticalement le fond 16. Les ouvertures 24 sont disposées de manière symétrique par rapport au centre du fond 16. Ici, les ouvertures 24 sont disposées selon une motif inscrit dans un cercle.

Les panneaux latéraux 18 sont fixés sur le pourtour du fond 16. Les panneaux latéraux 18 sont de la même matière que le fond 16. Cela permet de simplifier la réalisation de la boîte 10 par découpe et pliages.

Les panneaux 18 s'étendent verticalement vers le haut depuis le fond 16. La hauteur verticale des panneaux 18 est définie pour dépasser le niveau de la pizza 11 lorsque celle-ci est posée dans la boîte.

Les panneaux latéraux 18 sont reliés entre eux par des moyens de fixation (non représentés) classiques, comme par exemple de la colle. Les panneaux 18 ferment le pourtour de la boîte 10.

Les panneaux 18 sont suffisamment rigides pour supporter le poids d'un couvercle (non représenté).

Selon une variante non représentée, les panneaux sont reliés à un couvercle escamotable.

La plaque 14 de support de cuisson repose sur le fond 16. La plaque 14 est plane, rigide, sensiblement de la forme d'un disque de diamètre adapté à supporter la pizza 11.

La plaque 14 de support de cuisson est réalisée dans un matériau qui, entre autres critères, répond aux exigences des normes européenne d'hygiène, comme par exemple la norme Reach. De plus ce matériau doit être apte à garder toutes ses propriétés physiques à des températures entre 100°C et 300°C.

La plaque 14 est à usage unique, donc pour une seule cuisson de pizza. La durabilité de la plaque 14 est limitée à cet usage.

A titre d'exemple, la plaque 14 est réalisée dans les matériaux suivants : carton ondulé en papier de cuisson ou papier alimentaire, carton compressé, papier sulfurisé, matériaux biodégradables comme de la pulpe végétale ou du bois.

Les dimensions de la plaque 14 lui permettent d'être aisément insérée et/ou extraite de l'emballage 12.

Les dimensions de la plaque 14 sont avantageusement inférieures à celles du fond 16 de l'emballage 12. De cette manière, la plaque 14 peut être posée sur le fond 16 sans entrer en contact avec les panneaux latéraux 18.

Les dimensions de la plaque 14 sont adaptées au support de la pizza 11 aussi bien crue que cuite. La plaque 14 est apte à soutenir la pizza 11 crue avec une déformation réduite de la pizza 11 qui reste acceptable de manière, après cuisson, à obtenir une pizza sensiblement de la forme d'un disque.

La plaque 14 comporte aussi une pluralité de trous 26 d'aération traversants. Les trous 26 d'aération permettent une mise à l'air d'une partie de la pizza 11, pendant la cuisson. La pizza 11 cuit ainsi avec un croustillant mieux réparti, sur sa face inférieure.

Le dimensionnement des trous 26 est défini pour optimiser la cuisson de la pizza 11. Ici, Les trous 26 sont des cylindres de révolution d'axe vertical. Le dimensionnement des trous 26 doit aussi permettre de limiter la déformation de la pizza 11 à travers les trous 26 lorsqu'elle repose sur la plaque 14 de support de cuisson.

Selon le premier mode de réalisation, les trous 26 sont tous identiques et occupent de manière non uniforme la surface de la plaque 14 suivant un motif en quinconce.

Suivant une variante non représentée, les trous 26 sont de diamètres différents en fonction de la répartition préférée de la cuisson.

La plaque 14 comporte aussi une surface qui délimite une zone 28 en vis-à-vis des ouvertures. Lorsque la plaque 14 repose sur le fond 16 de l'emballage 12, la zone 28 est agencée en regard des ouvertures 24 du fond 16.

Ici, la zone 28 en vis-à-vis est inscrite dans un anneau centré. La zone 28 en vis-à-vis est une partie pleine de la plaque 14 et qui ne comporte donc pas de trous 26.

La boîte 10 comporte aussi des moyens 30 de positionnement angulaire de la plaque 14 de support de cuisson par rapport au fond 16. Les moyens 30 de positionnement angulaire permettent le positionnement de la zone 28 en vis-à-vis en regard des ouvertures 24 du fond.

La plaque 14 comporte ici des moyens 30 de positionnement angulaire de forme complémentaire aux panneaux 18 latéraux de l'emballage 12.

Les moyens 30 de positionnement sont ici deux pattes radiales 26 qui s'étendent vers l'extérieur du disque de la plaque 14. Chaque patte 26 présente une extrémité liée à la plaque 14, et une extrémité 32 extérieure libre. L'extrémité 32 extérieure comporte une face 34 plane complémentaire des panneaux 18 verticaux et adjacente à ceux-ci.

La boîte 10 peut être utilisée suivant deux modes.

Selon le premier mode, la boîte 10 est utilisée pour transporter la pizza 11 crue, par exemple entre un distributeur de pizza et un domicile personnel. Pendant le transport, la rigidité de la boîte 10 permet la protection de la pizza 11.

Une fois la boîte 10 ramenée au domicile, la pizza 11 et la plaque 14 de support de cuisson sont retirées de l'emballage 12 à mains nues pour être insérées dans un four classique de cuisson.

Idéalement, la pizza 11 et la plaque 14 sont retirées de l'emballage 12 simultanément. Pendant leur déplacement vers le four de cuisson, la pizza 11 repose sur la plaque 14 de support de cuisson.

Pendant la cuisson, la plaque 14 supporte la pizza 11. Les trous 26 de la plaque 14 de support de cuisson permettent une aération de la partie inférieure de la pizza 11 et une meilleure répartition de la chaleur autour de la pizza 11. Il en résulte une cuisson plus adaptée qui offre un croustillant réparti sur une surface plus uniforme qu'avec une plaque de cuisson classique, sans trous.

Une fois la cuisson terminée, la pizza 11 cuite et la plaque 14 sont retirées du four. L'usure de la plaque 14 et/ou son éventuelle absorption de liquides provenant de la pizza 11 ne lui permettent pas d'être réutilisée pour une nouvelle cuisson. La plaque 14 de support de cuisson peut être jetée avec les ordures ménagères recyclables.

Selon un deuxième mode, la boîte 10 est utilisée pour cuire une pizza 11 dans un dispositif de cuisson d'un distributeur automatique de pizza (non représenté).

Pendant les déplacements de la boîte 10 jusqu'au dispositif de cuisson, les moyens 30 de positionnement maintiennent la position angulaire de la plaque 14 par rapport à l'emballage 12.

Dans le dispositif de cuisson, la plaque 14 de support de cuisson est soulevée verticalement hors de l'emballage et éventuellement transférée vers un four de cuisson.

Le déplacement vertical est réalisé par des tiges ou doigts de section inférieure à celles ouvertures 24. Les tiges passent à travers les ouvertures 24 du fond de l'emballage 12 et viennent en appui contre la partie pleine de la plaque 14 en vis-à-vis de chaque ouverture 24 de manière à pousser la plaque 14 verticalement vers le haut hors de l'emballage 12.

Le positionnement de la plaque 14 de support de cuisson permet d'assurer la correspondance entre les ouvertures 24 du fond 16 et la zone 28 en vis-à-vis de la plaque 14 de support de cuisson.

La plaque 14 supportant la pizza 11 est soulevée dans le four de cuisson pendant toute la durée de la cuisson de la pizza 11.

La cuisson de la pizza 11 sur sa plaque support 14 présente les mêmes avantages et qualité que précédemment.

Une fois la cuisson terminée, la plaque 14 est abaissée et posée à nouveau dans l'emballage 12.

La boîte 10 contenant la pizza 11 cuite est alors délivrée au client. La boîte 10 peut être jetée avec les ordures ménagères recyclables après consommation de la pizza 11.

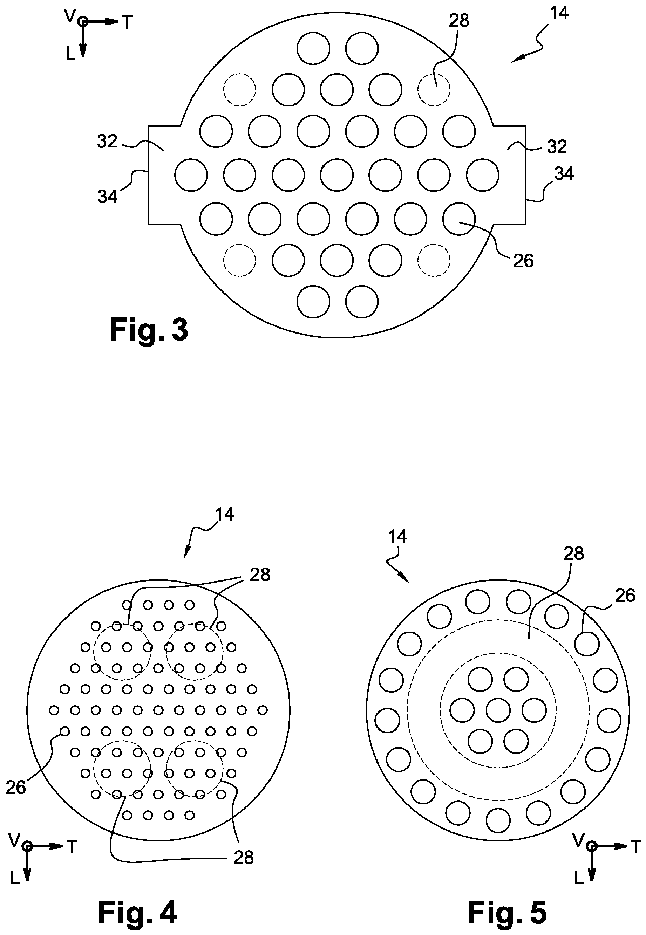

Un deuxième mode de réalisation sera décrit en référence à la figure 4, par comparaison avec le premier mode de réalisation.

Selon le deuxième mode de réalisation, la boîte 10 est similaire à celle décrite dans le premier mode de réalisation, à l'exception de la plaque 14 de support de cuisson et des moyens 30 de positionnement.

La plaque 14 de support de cuisson comporte un pluralité de trous 26 identiques et une zone 28 en vis-à-vis.

La zone 28 en vis-à-vis est une bande annulaire de matière. La largeur de la bande est dimensionnée pour être au moins apte à totalement recouvrir une ouverture 24 du fond 16.

Ainsi, la zone 28 est en regard des ouvertures 24 du fond 16 quelle que soit la position angulaire de la plaque 14 sur le fond 16.

Dans ce mode de réalisation, la boîte 10 ne comporte donc pas de moyens 30 de positionnement de la plaque 14 par rapport à l'emballage 12.

Un troisième mode de réalisation sera décrit en référence à la figure 5, par comparaison avec le deuxième mode de réalisation.

Selon le troisième mode de réalisation, la boîte 10 est similaire à celle décrite dans le deuxième mode de réalisation, à l'exception de la plaque 14 de support de cuisson.

La plaque 14 de support de cuisson comporte une pluralité de trous 26. Les dimensions des trous 26 sont plus petites que celles des ouvertures 24 du fond 16.

De cette manière, même si les trous 26 sont agencés en regards des ouvertures 24 du fond 16, une partie pleine de la plaque 14 est aussi agencée en regard des ouvertures 24.

Dans ce mode de réalisation, la boîte 10 ne comporte pas de zone spécifique 28 en vis-à-vis agencée en regard des ouvertures 24.

Selon une variante non représentée, la plaque de support de cuisson comporte des trous de petites dimensions sur une bande annulaire. La largeur de la bande est dimensionnée pour au moins être apte à totalement recouvrir une ouverture du fond.

Le reste de la plaque est traversé par des trous de dimensions plus grandes.

## Revendications

1. Boîte (10) jetable pour la cuisson et le transport d'un produit alimentaire préparé, et notamment d'une pizza (11), qui comporte :
- un fond (16) plan horizontal comportant au moins une ouverture (24) traversante ;
- un panneau (18) latéral vertical qui s'étend vers le haut sur toute la périphérie du fond (16) ; et
- une plaque (14) de support de cuisson horizontale, rigide, qui repose sur le fond (16) ;
**caractérisée en ce que** la plaque (14) de support de cuisson comporte au moins un trou (26) traversant suivant une orientation verticale, et **en ce qu'**au moins une partie pleine de la plaque (14) de support de cuisson est agencée en regard de l'ouverture (24) du fond (16).

2. Boîte (10) selon la revendication 1, **caractérisée en ce qu'**au moins une partie pleine de la plaque (14) de support est en regard de l'ouverture (24) du fond (16), quelle que soit la position angulaire de la plaque (14) de support par rapport au fond (16).

3. Boîte (10) selon la revendication 1, **caractérisée en ce qu'**elle comporte des moyens (30) de positionnement angulaire de la plaque (14) de support par rapport au fond (16).

4. Boîte (10) selon la revendication 3, **caractérisée en ce que** les moyens (30) de positionnement angulaire sont des surfaces complémentaires de la plaque (14) de support et du panneau (18) latéral.

5. Boîte (10) selon l'une quelconque des revendications 1 à 4, **caractérisée en ce qu'**au moins une partie pleine de la plaque (14) de support s'étend en regard de la totalité de l'ouverture (24) du fond (16).

6. Boîte (10) selon l'une quelconque des revendications 1 à 5, **caractérisée en ce que** la plaque (14) de support comporte une pluralité de trous (26).

7. Boîte (10) selon la revendication 6, **caractérisée en ce que** les trous (26) de la plaque (14) sont de dimensions différentes.
